Europäisches Patentamt

European Patent Office

Office européen des brevets

(11) Publication number: **0 353 974**
**A2**

## EUROPEAN PATENT APPLICATION

(21) Application number: 89307759.4

(51) Int. Cl.⁴: **B41M 3/14**

(22) Date of filing: 31.07.89

(30) Priority: 03.08.88 GB 8818431

(43) Date of publication of application:
07.02.90 Bulletin 90/06

(84) Designated Contracting States:
BE DE ES FR IT NL

(71) Applicant: KENRICK & JEFFERSON LIMITED
295 High Street
West Bromwich, B70 8NB(GB)

(72) Inventor: Hackwood, Roger c/o Kenrick &
Jefferson Limited
295 High Street
West Bromwich B70 8NB(GB)

(74) Representative: Prutton, Roger et al
MARKS & CLERK Alpha Tower Suffolk Street
Queensway
Birmingham B1 1TT(GB)

(54) Copy protection of multi-colour documents.

(57) A security document printed in colour is pro-
vided with a security area intended to defeat copying
on a dot-image type colour copier. Such area com-
prises a line pattern printed in a dark neutral colour
on a light neutral colour and is such that colour
copying creates a multi-coloured noire pattern not
present in the original. The line pattern may include
areas of rulings which differ in pitch, line thickness
and/or orientation. A security area in the form of a
printed disc of radial tapering lines is also disclosed.

**ANY BANK Plc.**

Background    Pattern

FIG    1

## COPY PROTECTION OF MULTI-COLOUR DOCUMENTS

This invention relates to the copy-protection of multi-colour documents, and is particularly concerned with preventing the making of colour copies on what are referred to herein as "dot-image" type copiers. This term is intended to mean copiers in which the copy image is made up of a regular matrix of colour and black dots. Such images are routinely made by scanning the original document, analysing the data generated by scanning and controlling the application of the colour and black dots according to the analysed data. Such copiers are capable of producing copies which are very difficult to distinguish from the original with the naked eye, even though the dots may be applied with a resolution of as low as 300 dots per inch (approximately 120 dots per cm).

It has been found by the applicant, however, that a weakness of such copiers occurs when a high contrast black and white original is copied. In the copy, although a black/white edge is faithfully reproduced as far as the naked eye is concerned, it is possible to discern under suitable magnification, spurious colour dots lying very close to the black/white edge, which are not exactly co-terminous therewith. This is believed to occur because dots of different colours do not coincide so that although the analysed data indicates the presence of a black/white edge, the colour dots cannot all be contained within the black area.

Moreover, the applicants have appreciated that the distribution of these spurious colour dots is not random, but, for any given copier is constant, having regard to the relationship between the black/white edge and the relative positions and orientations of the lines of colour dots which can be produced.

The applicants' invention has for its object to make use of this weakness to enable the spurious colour dots to be made visible to the naked eye.

In accordance with the invention, there is provided a security document intended to defeat a dot-image type colour copier, said security document having multi-coloured printed matter thereon as well as at least one security area of a line pattern printed in black or a dark neutral colour on a white or lightly coloured ground, such that a copy of the security area made on a dot-image type colour copier will contain a multi-coloured moiré pattern not present in the security area of the original document.

The security area may consist simply of a regular ruling, i.e. black lines equally spaced from one another on a white ground.

However, since some rulings are more effective in producing a colour moiré pattern on a particular copier than others, the security area or areas may contain different rulings, differing from one another in pitch and/or line thickness.

The security area or areas may contain rulings of different orientations.

Alternatively, the security area may contain a pattern made up of tapering lines, in which each line is inclined to its neighbour. Conveniently such lines are arranged to form a printed disc in which the black/white edges, defined by the tapering lines, extended radially of the disc. Alternatively, the tapering lines could be arranged to form undulating or other patterns.

A further alternative embodiment of the invention makes use of a security area formed of elongated alpha-numerical characters which appear as a broken ruling to the casual observer, but which, when the document is viewed at a small acute angle, can be read as alpha-numerical characters. With such an arrangement, not only does colour copying produce a multi-colour moiré pattern, but it also renders the characters substantially unreadable.

In the accompanying drawings:-

Figure 1 is a view of one example of a security document in accordance with the invention;

Figure 2 is a view of another example;

Figure 3 is an enlargement of a security area of the document shown in Figure 2,

Figure 4 is a view of yet another example.

Figure 5 is a view of a further example;

Figures 6 and 7 are an enlargements of two portions of the example of Figure 5, and

Figure 8 is a representation of a copy of the example of Figure 5 made on a colour copier.

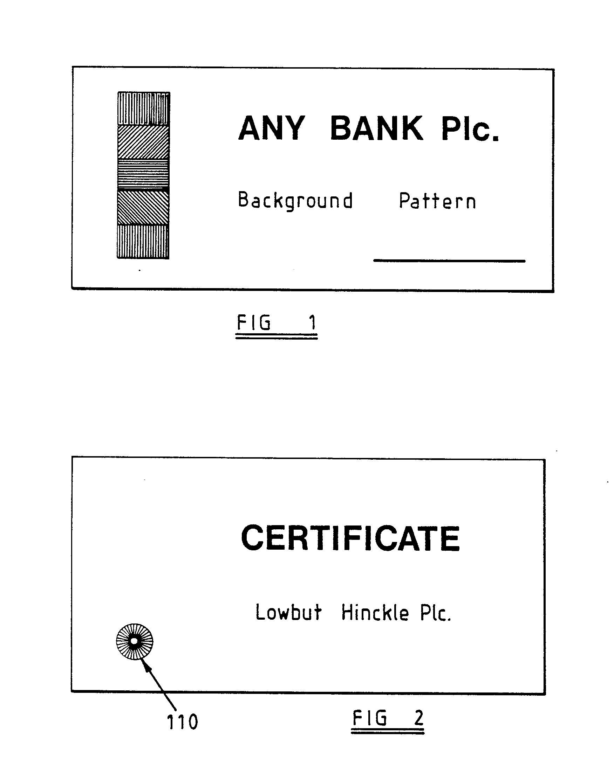

Referring firstly to Figure 1, the document shown is printed with various conventional message/patterns in a variety of colours, and, specifically to foil forgery by copying on a dot-image type colour copier, is printed with a security area (10) consisting of ruled black lines on a white background. In the example shown, the security area is divided into several sub-areas and in each sub-area ruling is of a different line thickness and/or spacing and/or has a different orientation.

As explained above, a copy produced on a dot-image type colour copier will fail to reproduce the ruled security area because a multi-coloured moiré pattern will appear in the security area instead of simple black lines on white.

It will be understood that the security area may consist of an area of the same printed ruling overall and, without reducing the effect of the invention, the lines may be in a dark neutral colour (such as dark olive green) and the background may be a pale colour. Black on white is, however, preferred as this will cause the copier to produce the greatest contrast in the multi-colour moiré pattern.

It has been found during experiments with one particular colour copier (namely a Cannon Laser Copier) produce strong multi-colour moire patterns with rulings having the following line thickness/spacing (all dimensions in inches):- 0.003/0.002, 0.003/0.005, 0.003/0.007, 0.003/0.00g, 0.005/0.003, 0.005/0.005, 0.005/0.007, 0.008/0.002, 0.010/0.005. There may, however, be many different line thickness/spacing combinations which are equally (or more) effective.

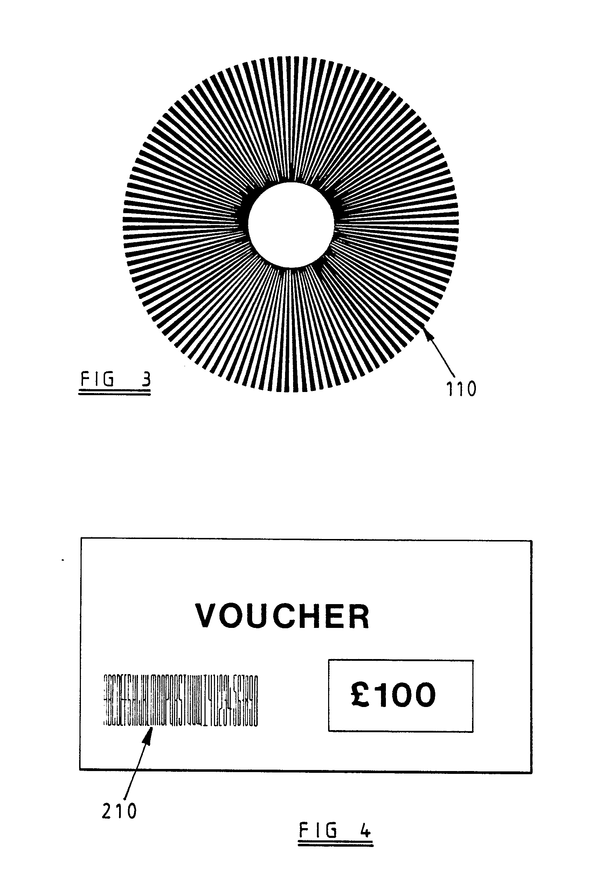

In the example shown in Figures 2 and 3 the security area (110) consists of tapering lines arranged in a disc. The black/white edges of such lines extend radially relative to the disc which has a white centre circle.

Because of the variable spacing and orientation of the lines in this disc pattern, strong moire patterns, falling off in contrast radially outwardly, are produced when the document is copied on a dot-image type colour copier. Such a pattern is particularly advantageous as it can be unobtrusively incorporated in the basic design of the document.

Turning, now, to Figure 4, the security area 210 in this case consists of alpha-numerical characters printed in a special elongated font designed such that the uprights in all the characters form part of a regular ruling. In actual practice, the characters would be even higher and narrower than those shown in Figure 4. The characters may be arranged to spell out a regularly repeated work. The characters can be read by viewing them at a very small acute angle.

With this arrangement, not only does the apparent ruling created by the characters form a moire pattern in a colour copy, but the characters become substantially illegible.

The example shown in Figures 5 to 8 makes use of the basic principle of the example shown in Figure 1. In this case, a voucher has coloured printing 300 and two shaded areas 301 and 302 which each present an overall impression of a midtoned area of a near neutral colour different from the colour of the printing 300. In fact each of the areas 301 and 302 is composed of areas of vertical and horizontal rulings. These are printed in an ink made up by mixing pantone green, black and white, which has been found to provide a particularly strong effect. In the area 301 the rulings are mainly vertical with a pitch of 0.010 inches and a line thickness of 0.005 inches. The area 301 includes letters 303 printed in a horizontal ruling with a pitch of 0.010 inches and a line thickness of 0.005 inches. In the other area, 302, the "background" rulings are horizontal and a graphic representation 304 of a chair is printed in a vertical ruling.

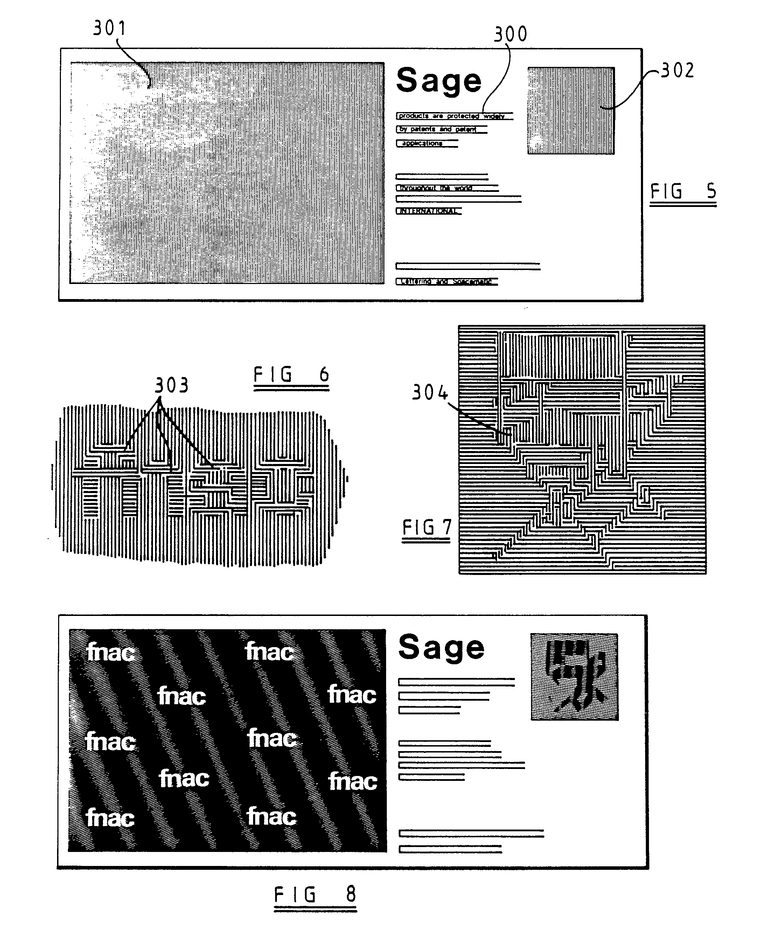

Figure 8 is an attempt at representing the image produced by copying the voucher of Figure 5 on a colour copier. The areas which contained vertical rulings have been reproduced as a strong coloured moiré pattern of inclined coloured bars, which clearly show that the copy is not genuine.

Experiments have shown that the effects illustrated in Figure 8 occur even though there may be considerable variations in the ink density during the course of a print run.

The use of mixed horizontal and vertical rulings to create words or letters as in the example of Figures 5 to 8 may also be combined with more conventional "engraved" scroll patterns. The printing plates used for manufacturing the vouchers or other security documents are produced by various photographic techniques and it is a relatively simple matter to combine the ruled image which creates the moiré patterns on copying with a scroll pattern during such production.

## Claims

1. A security document intended to defeat a dot-image type colour copier, said security document having multi-coloured printed matter thereon as well as at least one security area of a line pattern printed in black or a dark neutral colour on a white or lightly coloured ground, such that a copy of the security area made on a dot-image type colour copier will contain a multi-coloured moiré pattern not present in the security area of the original document.

2. A security document as claimed in Claim 1 in which said security area comprises a regular ruling.

3. A security documents as claimed in Claim 2 in which said security area comprises a plurality of rulings differing from one another in line pitch.

4. A security document as claimed in claim 2 in which said security area comprises a plurality of rulings differing from one another in line thickness.

5. A security document as claimed in Claim 2 in which said security area comprises a plurality of area of rulings of different orientations.

6. A security document as claimed in Claim 5 in which said areas of rulings represent alphanumeric characters.

7. A security document as claimed in Claim 5 in which said areas of rulings represent a graphic image.

8. A security document as claimed in Claim 1 in which said security area contains a pattern made up of tapering lines, each line being inclined to its neighbours.

9. A security document as claimed in Claim 8 in which said lines are arranged to form a printed disc in which the lines extend radially of the disc.

10. A security document as claimed in Claim 8 in which the tapering lines form an undulating pattern.

11. A security document as claimed in Claim 1 in which said security area is formed of elongated alpha-numerical characters.

ANY BANK Plc.

Background    Pattern

_____

FIG    1

CERTIFICATE

Lowbut   Hinckle Plc.

110                                FIG   2

FIG 3

110

VOUCHER

£100

210

FIG 4

FIG 5

FIG 6

FIG 7

FIG 8